# FASCICULE DE BREVET EUROPEEN

(11) **EP 3 222 448 B1**
(45) Date de publication et mention de la délivrance du brevet: **28.11.2018**
(21) Numéro de dépôt: 17160726.0
(22) Date de dépôt: 14.03.2017
(51) Int. Cl.: B60H 1/00, F41H 7/03, F41A 23/24

(54) **DISPOSITIF DE DISTRIBUTION D'AIR POUR TOURELLE**
VORRICHTUNG ZUR LUFTVERTEILUNG FÜR REVOLVER
AIR-DISTRIBUTION DEVICE FOR TURRET

(30) Priorité: 21.03.2016 FR 1600471
(43) Date de publication de la demande: 27.09.2017
(73) Titulaire: NEXTER Systems, 42328 Roanne Cedex (FR)
(72) Inventeur: Descatoire, Xavier, 18023 BOURGES (FR); Peloux, Aymeric, 18023 BOURGES (FR)
(74) Mandataire: Cabinet Chaillot

(56) Documents cités:
- EP-A1- 2 145 786
- FR-A1- 3 014 372
- US-A- 2 330 322
- US-A- 2 434 752

## Description

Le domaine technique de l'invention est celui des dispositifs de distribution d'air de climatisation pour véhicules militaires comportant une tourelle.

Afin de climatiser une tourelle de char, il est connu de la demande de brevet FR3014372 un joint tournant aéraulique offrant une distribution de ventilation optimale pour toutes les positions angulaires de la tourelle par rapport à la caisse et en particulier si la tourelle enchaine plusieurs tours sur elle-même.

Pour cela, la tourelle comporte une paire de gaines circulaires coaxiales destinées, pour l'une à acheminer de l'air frais, et pour l'autre à évacuer de l'air chaud ou inversement selon les conditions de température souhaitées en tourelle. Les gaines sont en général disposées au voisinage du plan de jointure entre la tourelle et la caisse du véhicule et au voisinage de la circulaire de tourelle. La présence des gaines dans cette zone du véhicule ainsi que leur volume est gênant pour permettre le passage d'un opérateur du châssis vers la tourelle ou pour les opérations de maintenance. De manière générale, les gaines peuvent gêner l'accessibilité dans leur voisinage. D'autres exemples sont divulgués par les documents US2434752, US2330322et EP21457876.

L'invention propose de résoudre ce problème d'accessibilité et de passage en fournissant des moyens de rupture temporaire de la continuité des gaines afin de ménager un passage entre celles-ci.

Ainsi, l'invention a pour objet un dispositif de distribution d'air de climatisation pour une tourelle d'un véhicule montée rotative par rapport à une caisse du véhicule, dispositif comportant au moins une gaine de conduite d'air, gaine comportant une goulotte solidarisable au véhicule et un obturateur solidarisable à la tourelle, gaine comportant au moins un premier et un second orifice d'écoulement d'air, dispositif *caractérisé en ce que* la gaine est en forme d'arc de cercle coaxial à l'axe de rotation de la tourelle, et en ce qu'il comprend au moins un conduit en forme d'arc de cercle ayant le même rayon moyen que celui de la gaine et apte à coulisser relativement à la gaine entre une position fermée où le conduit joint une extrémité de la gaine à une autre extrémité de ladite gaine, ou d'une autre gaine, pour une continuité de circulation de l'air entre les gaines, et une position ouverte dans laquelle le conduit est coulissé à l'intérieur de la gaine de manière à laisser un passage transversal à la gaine selon un secteur circulaire.

Avantageusement, le conduit comporte un fond comportant une ouverture en secteur annulaire coaxial à la gaine, fond recouvert par un couvercle, fond et couvercle aptes à tourner l'un par rapport à l'autre autour de l'axe de rotation de la tourelle.

Avantageusement, la correspondance de profils de la section interne de la gaine avec le profil de la section externe du conduit assure un guidage en rotation du conduit par rapport à la gaine.

Avantageusement, le fond du conduit comporte un moyen de blocage en position qui coopère avec une partie de la goulotte.

Avantageusement, le conduit comporte un moyen de blocage en position du couvercle qui coopère avec une partie de l'obturateur.

Avantageusement, le dispositif comporte deux gaines et deux conduits qui en position fermée rejoignent chacune des extrémités des gaines et qui dégagent deux passages transversaux aux gaines en position ouverte.

L'invention sera mieux comprise à la lecture de la description suivante, description faite en référence aux dessins en annexe, dessins dans lesquels :
La figure 1 représente une vue partielle de trois quarts en contre plongée de la partie inférieure d'une tourelle comportant un dispositif selon l'invention en interférence avec un opérateur.
La figure 2 représente une vue de trois quarts de dessus d'un dispositif selon l'invention en position fermée.
La figure 3 représente une vue de trois quarts de dessous d'un dispositif selon l'invention en position fermée.
La figure 4 représente une vue de trois quarts de dessus d'un dispositif selon l'invention en position ouverte.
La figure 5 représente une vue de trois quarts de dessous d'un dispositif selon l'invention en position ouverte.
La figure 6 représente une vue partielle de détail en coupe transversale selon le plan PP de la figure 4 d'un dispositif selon l'invention.
La figure 7 représente une vue partielle de trois quarts en contre plongée de la partie inférieure d'une tourelle comportant un dispositif selon l'invention sans interférence avec un opérateur.
La figure 8 représente une vue schématique en coupe transversale selon le plan PP de la figure 4.
La figure 9 représente une vue schématique de dessus d'un autre mode de réalisation de l'invention.

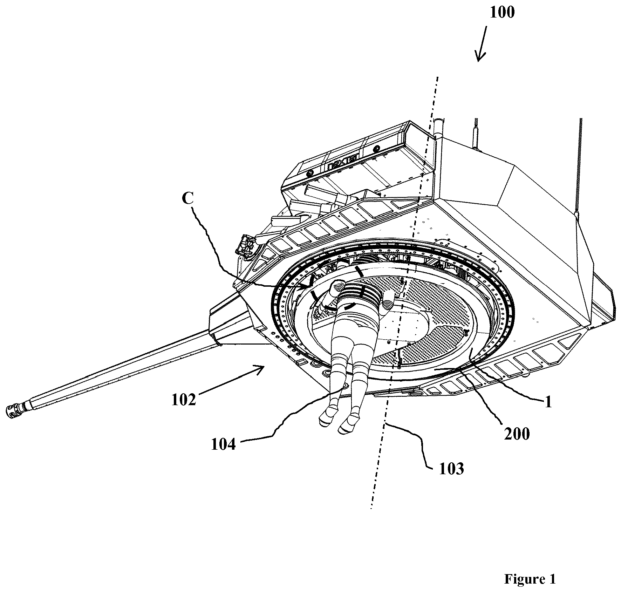

Selon la figure 1, une tourelle 100 d'un véhicule militaire comporte une ouverture 102 circulaire à sa partie inférieure et qui est centrée sur un axe 103 de pivotement vertical de la tourelle 100 par rapport à une caisse du véhicule (véhicule et caisse du véhicule non représentés).

Cette ouverture 102 est destinée entre autre au passage d'un opérateur 104 entre la caisse du véhicule et la tourelle 100 pour des opérations de maintenance.

Le véhicule est équipé d'un dispositif 1 de distribution d'air de climatisation tel que décrit dans le brevet FR3014372. Ce dispositif 1 est coaxial à l'ouverture 102 et comporte au moins une gaine aéraulique 200 circulaire permettant d'acheminer de l'air frais depuis la caisse vers la tourelle 100. On a représenté à la figure 1 une zone encerclée C qui permet de localiser et mettre en évidence une interférence entre le dispositif de distribution d'air 1 et l'opérateur 104.

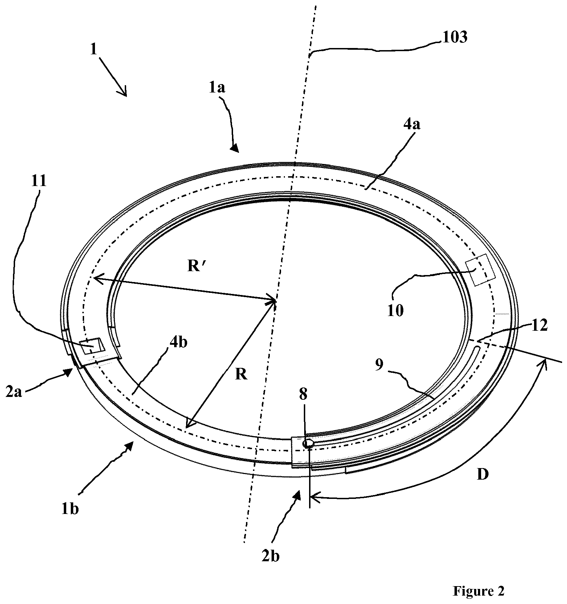

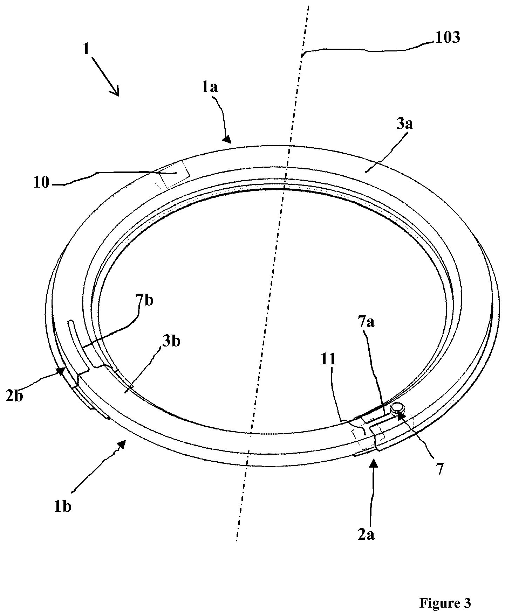

Selon les figures 2 et 3, un dispositif 1 selon l'invention comporte une gaine la en arc de cercle centrée sur l'axe 103 de pivotement de la tourelle. Cette gaine la comporte un premier orifice 10 et un second orifice 11 d'écoulement d'air respectivement destinés à permettre l'entrée d'air frais depuis le châssis et à conduire cet air frais dans la tourelle.

Contrairement à la gaine 200 de l'état de la technique, cette gaine la n'est pas close sur elle-même mais présente une interruption de sa continuité créant ainsi deux extrémités 2a et 2b à la gaine 1a.

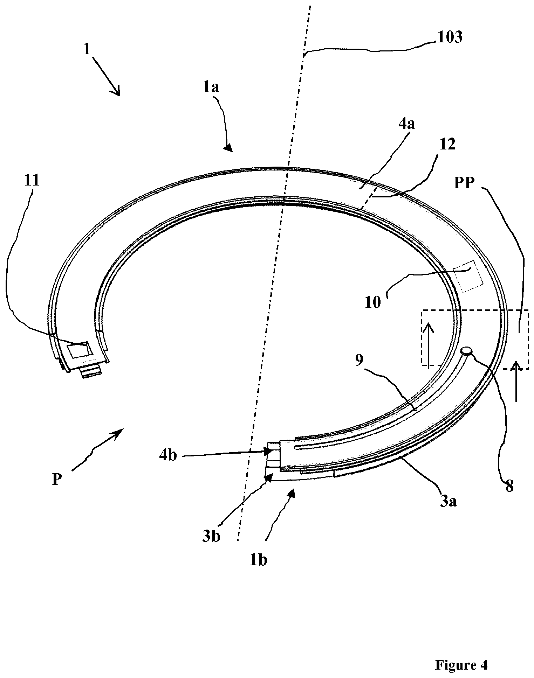

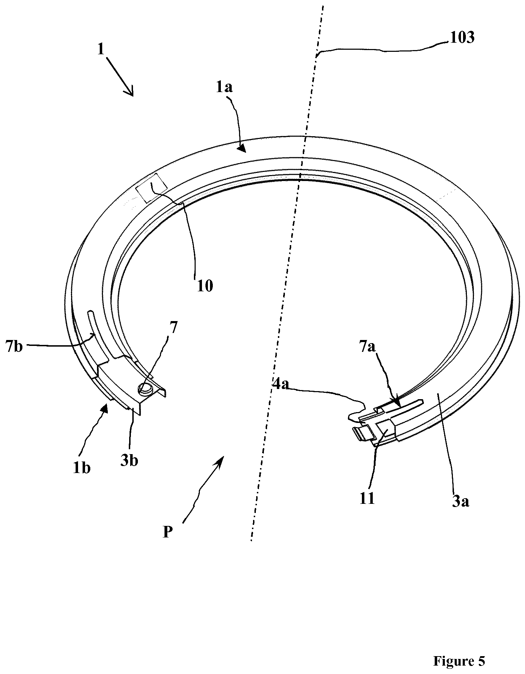

Le dispositif 1 peut adopter une position dite position fermée illustrée aux figures 2 et 3 et une position dite ouverte illustrée aux figure 4 et 5. Dans la position fermée un conduit 1b en forme d'arc de cercle complémentaire à celui de la gaine 1a, relie chaque extrémité 2a et 2b de la gaine 1a, assurant ainsi une continuité de circulation de l'air entre la gaine 1a et le conduit 1b et donc aussi au sein du dispositif 1.

Comme visible aux figures 4, 5 et 6, le conduit 1b est apte à coulisser de manière télescopique dans la gaine la pour donner une position ouverte à la gaine aéraulique 1 selon l'invention. A cette fin l'arc de cercle du conduit 1b a le même rayon moyen R que celui R' de la gaine 1a (rayons représentés figure 2), ainsi le conduit 1b peut coulisser intégralement vers une des extrémités 2a ou 2b de la gaine la jusqu'à s'escamoter totalement dans la gaine 1a. On entend par rayon moyen le rayon du cercle disposé à égale distance des parois latérales de la gaine ou du conduit.

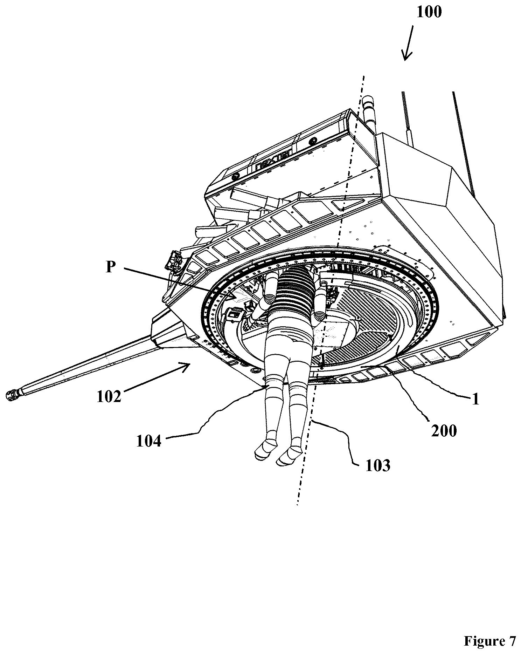

Un passage P peut alors être aménagé transversalement au dispositif 1 ce qui permet à un opérateur 104 selon la figure 7 de pouvoir évoluer au voisinage de la gaine la sans interférer avec le dispositif 1.

Comme visible aux figures 2 à 6, la gaine la comporte une goulotte 3a qui a une ouverture en forme de secteur annulaire centré sur l'axe de rotation 103, ouverture qui est couverte par un obturateur 4a. De même, le conduit 1b comporte un fond 3b qui a une ouverture en forme de secteur annulaire centré sur l'axe de rotation 103 et qui est couverte par un couvercle 4b.

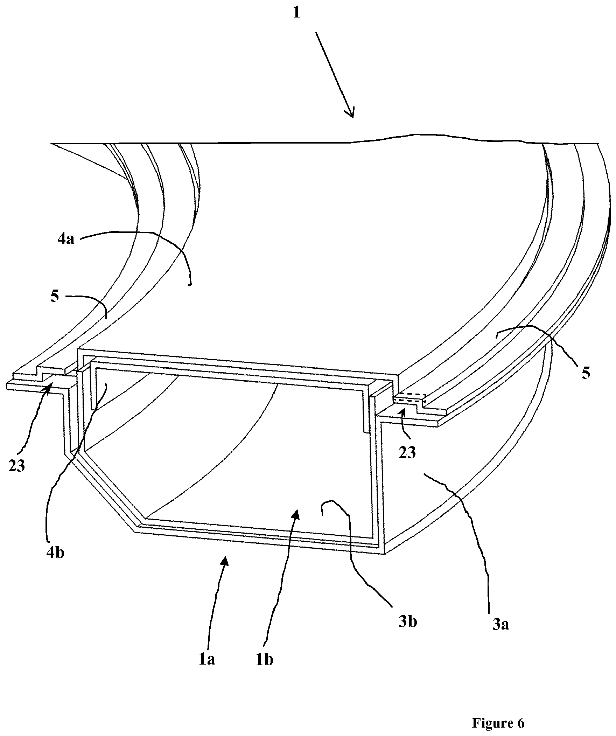

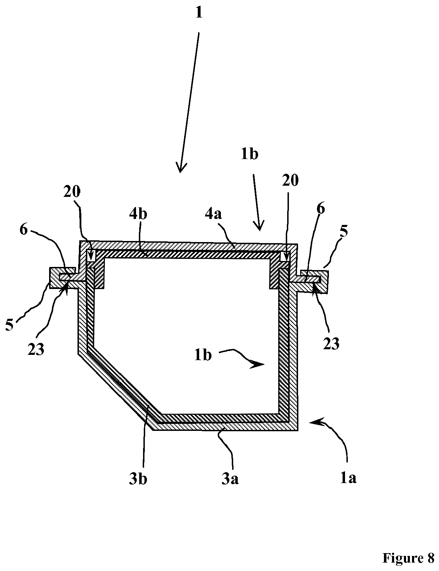

On notera à la figure 4 et aux figures 6 et 8 que la goulotte 3a comporte deux rebords 5 qui délimitent chacun une fente circulaire 23. La gaine la comporte ainsi une telle fente 23 sur son coté destiné à être orienté vers l'axe de pivotement tourelle ainsi que sur le côté opposé destiné à être orienté vers l'extérieur de la tourelle.

Chaque fente 23 est destinée à recevoir une ailette 6 disposée de chaque côté de l'obturateur 4a.

De cette manière l'obturateur 4a est guidé en rotation autour de l'axe de tourelle 103 et peut tourner relativement à la goulotte 3a.

Le conduit 1b est conformé avec un profil de sa section externe en correspondance avec le profil interne de la section de la gaine 1a. De cette façon il est aisé de faire coulisser le conduit 1b dans la gaine la. De plus, cette correspondance de forme limite les fuites d'air au niveau des jointures des gaines 1a et 1b.

Visible à la figure 8, à l'instar de l'obturateur 4a, le couvercle 4b est mobile en rotation par rapport au fond 3b mais aussi par rapport à la goulotte 3a. Une bordure 20 de chaque côté du couvercle 4b permet au couvercle 4b de prendre appui sur les côtés du fond 3b.

En position fermée, il est nécessaire que la goulotte 3a soit solidaire du fond 3b afin que les différents frottements auxquels sont soumis la goulotte 3a et le fond 3b n'occasionnent pas une ouverture du dispositif 1. Il en est de même pour l'obturateur 4a qui doit être solidaire du couvercle 4b en position fermée. Pour cela, le dispositif 1 comporte un premier 7 et un second 8 moyen de solidarisation destinés respectivement à solidariser la goulotte 3a avec le fond 3b pour l'un, et l'obturateur 4a avec le couvercle 4b pour l'autre.

Ainsi, lorsque le dispositif est dans sa position fermée, c'est à dire lorsque le conduit 1b rejoint les deux extrémités de la gaine 1a, le fond 3b du conduit 1b est solidaire de la goulotte 3a de la gaine la et le couvercle 4b du conduit 1b est solidaire de l'obturateur 4a de la gaine.

Lors de la rotation de la tourelle, le couvercle 4b et l'obturateur 4a, qui sont solidaires de la tourelle, pivoteront ensemble par rapport au fond 3b et à la goulotte 3a qui sont solidaires du véhicule.

La tourelle sera stoppée dans une position permettant de positionner le couvercle 4b juste au-dessus du fond 3b. Il est alors possible de désolidariser ces deux éléments, en dévissant les premier 7 et second moyen 8 de solidarisation, pour pouvoir faire coulisser les deux parties du conduit 1b dans la gaine 1a et libérer le passage P.

Le premier moyen de solidarisation 7 visible à la figure 3 comportera par exemple une vis moletée 7 classiquement connue de l'Homme du Métier solidaire du fond 3b et apte à circuler dans un trou oblong en arc de cercle 7a de la goulotte 3a et dont une extrémité débouche à la première extrémité 2a de la goulotte 3a. Le moyen de solidarisation 7 (vis moletée) met en pression la goulotte 3a contre le fond 3b bloquant ainsi le fond 3b en position fermée par rapport à la goulotte 3a.

On notera que la seconde extrémité 2b de la goulotte 3a comporte également un trou oblong 7b qui permet de bloquer le fond 3b en position ouverte.

De la même manière, le second moyen de solidarisation 8 comporte par exemple aussi une vis moletée 8 destinée à mettre en pression une face de l'obturateur 4a sur une face correspondante du couvercle 4b pour les immobiliser l'une relativement à l'autre. Ce second moyen de solidarisation 8 permet de bloquer le couvercle 4b en position ouverte ou bien en position fermée relativement à l'obturateur 4a, mais il permet aussi des réglages d'ouverture intermédiaires grâce à un trou oblong 9 situé sur l'obturateur 4a, trou oblong 9 parcourant un secteur angulaire de longueur au moins équivalente à la longueur de l'ouverture entre les extrémités 2a et 2b de la gaine la. Afin d'éviter toute fuite par le trou oblong, l'Homme du métier prendra soin de positionner la seconde vis moletée 8 à une distance D de la première extrémité 12 du couvercle 4b au moins égale à une fois la longueur du trou oblong 9 comme représenté à la figure 2.

Ainsi lorsque le dispositif de distribution d'air 1 est en position fermée, la circulation de l'air peut se faire sans discontinuité dans toute la gaine 1 et pour toutes les orientations en gisement de la tourelle.

Comme sur la figure 7 Lorsque l'accessibilité en tourelle est souhaitée, la tourelle est mise dans une position de gisement prédéterminée qui fait correspondre l'obturateur 4a au-dessus de la goulotte 3a et le couvercle 4b au-dessus du fond 3b. Le fond 3b et le couvercle 4b formant le conduit 1b, peuvent alors être coulissés dans la gaine la pour obtenir une position ouverte du dispositif 1 et ainsi laisser un accès dégagé vers la tourelle pour un opérateur.

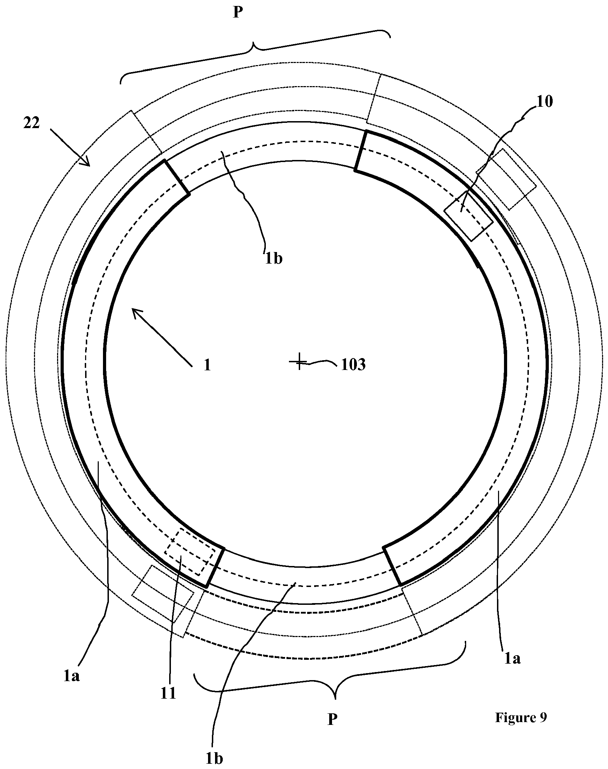

Le dispositif selon l'invention peut comporter une pluralité de gaines la et une pluralité de conduits 1b. En l'espèce, le dispositif 1 représenté à la figure 9, comporte deux gaines la reliées entre elles par deux conduits 1b qui peuvent glisser dans les gaines la afin de dégager deux zones de passage P.

Comme enseigné dans le brevet FR3014372, il est possible d'associer plusieurs dispositifs de distribution d'air afin de faire circuler de l'air frais dans un premier dispositif et de l'air chaud dans un second dispositif. On voit ainsi que les dispositifs pourront être disposés concentriquement l'un au-dessus de l'autre ou bien l'un autour de l'autre. Evidemment les zones d'ouverture des gaines devront correspondre. A titre d'exemple la figure 9, représente en pointillés un second dispositif 22 entourant le premier dispositif 1 et dont les zones de passage P correspondent.

## Revendications

1. Dispositif de distribution d'air (1) de climatisation pour une tourelle (100) d'un véhicule montée rotative par rapport à une caisse du véhicule, dispositif comportant au moins une gaine (1a) de conduite d'air, gaine (1a) comportant une goulotte (3a) solidarisable au véhicule et un obturateur (4a) solidarisable à la tourelle, gaine (1a) comportant au moins un premier et un second orifice (10,11) d'écoulement d'air, dispositif (1) ***caractérisé en ce que*** la gaine (1a) est en forme d'arc de cercle coaxial à l'axe de rotation (103) de la tourelle, et **en ce qu'**il comprend au moins un conduit (1b) en forme d'arc de cercle ayant le même rayon moyen (R) que celui de la gaine (1a) et apte à coulisser relativement à la gaine (1a) entre une position fermée où le conduit (1b) joint une extrémité (2a) de la gaine (1a) à une autre extrémité (2b) de ladite gaine (1a), ou d'une autre gaine (1a), pour une continuité de circulation de l'air entre les gaines (1a), et une position ouverte dans laquelle le conduit (1b) est coulissé à l'intérieur de la gaine (1a) de manière à laisser un passage (P) transversal à la gaine (1a) selon un secteur circulaire.

2. Dispositif de distribution d'air (1) selon la revendication 1, **caractérisé en ce que** le conduit (1b) comporte un fond (3b) comportant une ouverture en secteur annulaire coaxial à la gaine (1a), fond recouvert par un couvercle (4b), fond (3b) et couvercle (4b) aptes à tourner l'un par rapport à l'autre autour de l'axe de rotation (103) de la tourelle.

3. Dispositif de distribution d'air (1) selon la revendication 2, **caractérisé en ce que** la correspondance de profils de la section interne de la gaine (1a) avec le profil de la section externe du conduit (1b) assure un guidage en rotation du conduit (1b) par rapport à la gaine (1a).

4. Dispositif de distribution d'air (1a) selon la revendication 3, **caractérisé en ce que** le fond (4a) du conduit (1b) comporte un moyen de blocage (7) en position qui coopère avec une partie de la goulotte (7a).

5. Dispositif de distribution d'air selon une des revendications 1 à 4, **caractérisé en ce que** le conduit (1b) comporte un moyen de blocage (8) en position du couvercle (4b) qui coopère avec une partie (9) de l'obturateur (4a).

6. Dispositif de distribution d'air (1) selon une des revendications 1 à 5, **caractérisé en ce que** le dispositif (1) comporte deux gaines (1a) et deux conduits (1b) qui en position fermée rejoignent chacune des extrémités des gaines (1a) et qui dégagent deux passages (P) transversaux aux gaines (1a) en position ouverte.

## Patentansprüche

1. Vorrichtung zur Verteilung der Luft (1) einer Klimaanlage für einen Geschützturm (100) eines Fahrzeugs, der drehbar im Verhältnis zu einem Fahrzeugkasten montiert ist, wobei die Vorrichtung mindestens ein Rohr (1a) zur Luftleitung umfasst und das Rohr (1a) eine Rinne (3a) umfasst, die mit dem Fahrzeug verbindbar ist, und einen Verschluss (4a), der mit dem Geschützturm verbindbar ist, wobei das Rohr (1a) mindestens eine erste und eine zweite Öffnung (10, 11) als Luftablass umfasst, wobei die Vorrichtung (1) ***dadurch gekennzeichnet ist*, dass** das Rohr (1a) in Kreisbogenform ist, koaxial zur Rotationsachse (103) des Geschützturms, sowie dadurch, dass sie mindestens eine Leitung (1b) in Kreisbogenform mit demselben mittleren Radius (R) umfasst wie der des Rohrs (1a), und die fähig ist, in Bezug auf das Rohr (1a) zwischen einer verschlossenen Position zu gleiten, in der die Leitung (1b) ein Ende (2a) des Rohrs (1a) mit einem anderen Ende (2b) des Rohrs (1a) verbindet, oder eines anderen Rohrs (1a), für eine Luftkreislaufkontinuität zwischen den Rohren (1a), und einer offenen Position, in der die Leitung (1b) in dem Rohr (1a) gleiten gelassen wird, um einen Durchgang (P) quer zum Rohr (1a) gemäß eines runden Querschnitts freizulassen.

2. Luftverteilungsvorrichtung (1) nach Anspruch 1, **gekennzeichnet dadurch, dass** die Leitung (1b) einen Boden (3b) umfasst, der eine Öffnung mit Ringsektor umfasst, koaxial zum Rohr (1a), der Boden ist von einem Deckel (4b) bedeckt, Boden (3b) und Deckel (4b) sind geeignet, zueinander um die Drehachse (103) des Geschützturms zu drehen.

3. Luftverteilungsvorrichtung (1) nach Anspruch 2, **gekennzeichnet dadurch, dass** die Entsprechung zwischen Profilen des inneren Querschnitts des Rohrs (1a) und dem Profil des äußeren Querschnitts der Leitung (1b) eine rotierende Führung der Leitung (1b) im Verhältnis zum Rohr (1a) sichert.

4. Luftverteilungsvorrichtung (1a) nach Anspruch 3, **gekennzeichnet dadurch, dass** der Boden (4a) der Leitung (1b) ein Mittel zur Blockierung (7) in Position umfasst, das mit einem Teil der Rinne (7a) zusammenwirkt.

5. Luftverteilungsvorrichtung nach einem der Ansprüche 1 bis 4, **gekennzeichnet dadurch, dass** die Leitung (1b) ein Mittel zur Blockierung (8) in Position des Deckels (4b) umfasst, das mit einem Teil (9) des Verschlusses (4a) zusammenwirkt.

6. Luftverteilungsvorrichtung (1) nach einem der Ansprüche 1 bis 5, **gekennzeichnet dadurch, dass** die Vorrichtung (1) zwei Kanäle (1a) und zwei Leitungen (1b) umfasst, die in geschlossener Position jedes der Enden der Kanäle (1a) erreichen und in offener Position zwei Durchgänge (P) quer zu den Kanälen (1a) freigeben.

## Claims

1. A device for the distribution of conditioning air (1) for a vehicle turret (100) rotatably mounted with respect to a vehicle body, the device comprising at least one airflow sheath (1a), the duct (1a) comprising a chute (3a) adapted to be made integral with the vehicle and a shutter (4a) adapted to be made integral with the turret, the duct (1a) comprising at least one first airflow port and one second airflow port (10,11), the device (1) being ***characterised in that*** the sheath (1a) is in the form of an arc of a circle that is coaxial with the rotation axis (103) of the turret, and **in that** it comprises at least one duct (1b) in the form of an arc of a circle having the same average radius (R) as that of the sheath (1a) and able to slide with respect to the sheath (1a) between a closed position in which the duct (1b) connects one end (2a) of the sheath (1a) to another end (2b) of said sheath (1a), or of another sheath (1a), for a continuity of airflow between the sheaths (1a), and an open position in which the duct (1b) is slid within the sheath (1a) so as to leave a passage (P) transverse to the sheath (1a) along a circular sector.

2. The air distribution device (1) according to claim 1, **characterised in that** the duct (1b) has a bottom (3b) comprising an annular sector opening, the annular sector being coaxial with the sheath (1a), the bottom being covered by a cover (4b), the bottom (3b) and the cover (4b) being able to rotate with respect to each other around the rotation axis (103) of the turret.

3. The air distribution device (1) according to claim 2, **characterised in that** the matching of profiles of the inner section of the sheath (1a) with the profile of the outer section of the duct (1b) ensures a guidance in rotation of the duct (1b) relative to the sheath (1a).

4. The air distribution device (1) according to claim 3, **characterised in that** the bottom (4a) of the duct (1b) comprises means for blocking in position (7), which cooperate with a part of the chute (7a).

5. The air distribution device (1) according to one of claims 1-4, **characterised in that** the duct (1b) has means (8) for blocking in position the cover (4b), the means (8) for blocking in position the cover cooperating with a part (9) of the shutter (4a).

6. The air distribution device (1) according to one of claims 1-5, **characterised in that** the device (1) comprises two sheaths (1a) and two ducts (1b) which, in the closed position, join each of the ends of the sheaths (1a) and which clear two passages (P) transverse to the sheaths (1a) in the open position.
